# EUROPEAN PATENT SPECIFICATION

(11) **EP 3 825 667 B1**
(45) Date of publication and mention of the grant of the patent: **26.07.2023**
(21) Application number: 19306508.3
(22) Date of filing: 22.11.2019
(51) Int. Cl.: G01K 1/14

(54) **TEMPERATURE MEASUREMENT ACCESSORY**
TEMPERATURMESSZUBEHÖR
ACCESSOIRE DE MESURE DE LA TEMPÉRATURE

(43) Date of publication of application: 26.05.2021
(73) Proprietor: Tyco Electronics France SAS, 95300 Pontoise (FR)
(72) Inventor: DELIGNY, Charlotte, 69100 Villeurbanne (FR); VIRLOUVET, Annie, 69740 Genas (FR); PIONCHON, Laurence, 01220 La Boisse (FR); FRANCE, Philippe, 42140 Chazelles sur Lyon (FR)
(74) Representative: Germain Maureau

(56) References cited:
- KR-A- 20150 128 306
- KR-B1- 102 041 315

## Description

### Field of the invention

The present invention concerns a temperature measurement accessory for a terminal block.

### Prior art

It is known to monitor the temperature of a current bar located in a terminal block for safety reasons. Indeed, when the temperature of the current bar is out of an appropriate working range, it could mean that the installation in which the terminal block is installed presents a malfunction.

Temperature sensors such as resistance thermometer can be convenient when installed in proximity of the current bar inside the terminal block. However, the temperature sensor should be connected to a processing unit that determines if the measured temperature is within the appropriate working range or not and also informs the user of a malfunction. KR 102 041 315 B1 describes a temperature measurement accessory for a terminal block, the temperature measurement accessory being configured to measure a temperature and to communicate said measured temperature to a processing unit, the temperature measurement accessory comprising:a mounting mechanism, configured to cooperate with the terminal block according to an insertion direction to a mounted position, the mounted mechanism comprising a heat-conductive part configured to cooperate with a current bar of the terminal block in the mounted position; and a temperature sensor attached to or located in the heat-conductive part; and a connecting assembly.

It therefore appears that an assembly comprising a temperature sensor and a processing unit necessitate space to be mounted on the terminal block. The mounting and dismounting of said assembly could also be difficult.

The present invention aims to solve all or some of the disadvantages mentioned above.

### Summary of the invention

For this purpose, the present invention relates to a temperature measurement accessory for a terminal block, the temperature measurement accessory being configured to measure a temperature and to communicate said measured temperature to a processing unit, the temperature measurement accessory comprising:
a mounting mechanism configured to cooperate with the terminal block according to an insertion direction to a mounted position, the mounted mechanism comprising a heat-conductive part configured to cooperate with a current bar of the terminal block in the mounted position,
a temperature sensor attached to or located in the heat-conductive part,
a connecting assembly provided with a plug arranged to cooperate with a complementary socket of the processing unit and provided with at least one connecting wire attached at a first extremity to the temperature sensor and at a second extremity to the plug, the first extremity being extending subtantially parallel to the insertion direction or the first extremity being provided with a turning fraction that changes from a transverse to a subtantially parallel orientation to the insertion direction toward the second extremity.

In other words, the first extremity is oriented substantially parallel to the insertion direction from its junction point with the temperature sensor or after the turning fraction. Substantially parallel is equivalent to parallel or oblique with respect to the insertion direction.

This provision enables to have an easy-to-install temperature measurement accessory since the first extremity exiting the temperature sensor is aligned with the insertion direction. This feature therefore facilitates the adaptation to the geometry of the terminal block that can remain simple: a straight opening with access to the current bar is sufficient.

There is also no geometrical restriction due the placement of the processing unit as the processing unit is located remotely from the temperature sensor and the mounting mechanism.

According to an aspect of the invention, the temperature sensor presents a main dimension extending transverse to or substantially parallel to the insertion direction.

According to an aspect of the invention, the temperature sensor presents an overall cylindrical form. Preferably, the temperature sensor is a resistance thermometer. In particular, the resistance thermometer is of the PT1000 type.

According to an aspect of the invention, the at least one connecting wire comprise two connecting wires, each comprising a first extremity and a second extremity.

According to an aspect of the invention, the mounting mechanism comprises a screw configured to cooperate with a thread formed in the current bar.

This provision allows to have the temperature sensor close to the current bar in the mounted position and to easily conduct heat toward the temperature sensor to improve the accuracy of the measurement.

In addition, the use of a screw enables a fast and reliable installation of the temperature measurement accessory in the mounted position. As well, it is easy to dismantle the temperature measurement accessory from the terminal block.

According to one aspect of the invention, the screw is included in the heat-conductive part. According to an aspect of the invention, the screw comprises a threaded shank extending according to the insertion direction in the mounted position.

According to one aspect of the invention, an intermediate terminal block element can be put between the mounting mechanism and the current bar in the mounted position.

Preferably, the intermediate terminal block element can comprise a thread aligned with the thread of the current bar to cooperate with the screw.

In particular, the intermediate terminal block element can be a current conducting part as a shunt element of the terminal block configured to electrically connect two junction blocks cooperating side by side.

According an aspect of the invention, the mounting mechanism includes a washer configured to cooperate with a head of the screw in the mounted position, the temperature sensor being attached to the washer or located in a receiving orifice of the washer.

This enables to use a standardized screw as the mechanism includes a separate part, the washer, wherein the temperature sensor is located. This also facilitate the screwing, as the first extremity is distant from the axis of the thread.

According to an aspect of the invention, the washer comprises a transverse part arranged for extending transversally to the insertion direction and for cooperating with the screw in mounted position and a longitudinal part arranged for extending substantially parallel to the insertion direction in the mounted position, the longitudinal part being arranged to receive the temperature sensor.

This provision allows defining a simple and reliable mounting mechanism to confer the proper orientation to the first extremity of the connecting wire.

According to an aspect of the invention, the temperature sensor is located in the receiving orifice formed in the longitudinal part.

This provision enables to easily place the temperature sensor in proximity of the current bar for acquiring a reliable measurement.

According to an aspect of the invention, the longitudinal part is included in the heat-conductive part. Preferably, the transverse part is included in the heat-conductive part.

According to an aspect of the invention, the longitudinal part comprises two portions that present symmetrical external dimensions with regard to the insertion direction in the mounted position, the two symmetrical portions comprising a first portion with the receiving orifice and a second portion.

This enables to define a symmetrical washer that can be easily installed in the terminal block according two different orientations. The manufacturing of the washer is easier due to its symmetry.

According to an aspect of the invention, the longitudinal part presents an elongated form transversally to the insertion direction in the mounted position. Preferably, the elongated form is defined by a constant lateral size. In particular, the transverse part is also comprised within the constant lateral size of the elongated form transversally to the insertion direction in mounted position.

This geometrical configuration enables an easy installation as the elongated form can cooperate with a corresponding receiving recess in the terminal block.

According to an aspect of the invention, the transverse part presents a through hole or a notch for the passage of the screw in the mounted position.

According to a variant, the longitudinal part comprises a unique portion located on one side of the head of the screw. Preferably, the notch is opening on the opposite side of the longitudinal part with respect to the insertion direction in the mounted position.

According to an aspect of the invention, the temperature sensor is attached to or located in the screw.

This provision enables the temperature sensor to be close to the current bar to improve the accuracy of the measurement. According to an aspect of the invention, the temperature sensor is located in the receiving orifice accessible from the head of the screw.

According to an aspect of the invention, the receiving orifice extends according to an extension axis of the screw. The extension axis is aligned with the insertion direction. Preferably, the receiving orifice is at least partially located in a segment of the extension axis facing the thread formed in the current bar transversally to the insertion direction in mounted position. This provision improve the quality of the measurement.

According to another aspect of the invention, the receiving orifice extends parallel to the extension axis of the screw. Preferably, the receiving orifice is formed in a top surface of the head of the screw. This provision enables to have an easy access to the receiving orifice while assuring an accurate measurement as the screw has heat-conductive properties.

The invention also concerns a temperature measurement system comprising a temperature measurement accessory as described above and the processing unit, wherein the processing unit comprises a measurement circuit configured to determine if the communicated temperature measured by the temperature sensor is comprised in an appropriate working range, the processing unit also comprising a warning element configured to be active when the communicated temperature is out of the appropriate working range.

This provision enables to have on one side a compact temperature measurement accessory that is easy to install on the terminal block and on the other side a distant processing unit that comprises the processing means necessary to warn the user when a default temperature is detected.

According to an aspect of the invention, the measurement circuit comprises a microprocessor, a battery and/or a link to an external power source. Preferably, the warning element comprises a light and in particular a LED. In particular, the warning element comprises an alarm.

According to an aspect of the invention, the processing unit comprises a casing configured to be removably attached to the terminal block.

This provision facilitates the installation of the processing unit on the terminal block. According to an aspect of the invention, the casing is provided with a hinge assembly configured to cooperate with a complementary assembly of the terminal block. The processing unit is movable around the hinge assembly to enable a user to access an inside at least a part of the terminal block without dismantling the processing unit.

According to an aspect of the invention, the processing unit comprises communication means, such as wired or wireless communication means. For example, a dedicated plug of the processing unit can be used to precisely monitor the measured temperature. A wireless communication means can emit radio waves for a distant control unit.

The present invention also concerns a terminal block assembly comprising a temperature measurement system as described above and the terminal block, the current bar of the terminal block extending in a plane transverse to the insertion direction.

This provision means that the at least one connecting wire extends from the terminal block in mounted position in a direction substantially parallel to the insertion direction, the extending plane of the current bar being transverse.

According to an aspect of the invention, the terminal block comprises a rail connecting part located on a bottom side of the terminal block, the connecting wire exiting a top side of the terminal block in the mounted position, the top side being opposed to the bottom side according to the insertion direction.

The different aspects defined above that are not incompatible can be combined.

### Brief description of the figures

The invention will be better understood with the aid of the detailed description that is set out below with reference to the appended drawing in which:
- figure 1 is a perspective view of a temperature measurement accessory mounted in a terminal block;
- figure 2 is a sectional view of the temperature measurement accessory in mounted position;
- figure 3 is a perspective view of a waher of the temperature measurement accessory;
- figure 4 is a perspective view of the washer according to a first alternative;
- figure 5 is a perspective view of the washer according to a second alternative;
- figure 6 is a sectional view of the temperature measurement accessory in mounted position according to a third alternative;
- figure 7 is a perspective view of a screw of the temperature measurement accessory according to a fourth alternative;
- figure 8 is a sectional view of the temperature measurement accessory and a processing unit mounted on the terminal block;
- figure 9 is a perspective view of a temperature measurement system comprising the temperature measurement accessory and the processing unit;
- figure 10 is a perspective view of the washer according to a fifth alternative.

### Description with reference to the figures

In the following detailed description of the figures defined above, the same elements or the elements that are fulfilling identical functions may retain the same references so as to simplify the understanding of the invention.

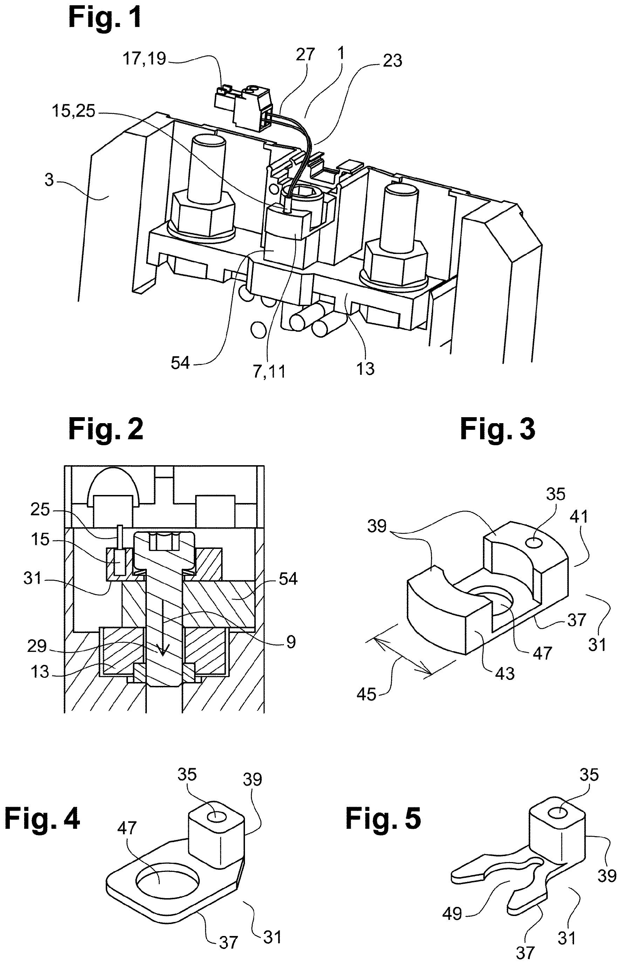

As illustrated in figures 1, 2 and 8, a temperature measurement accessory 1 for a terminal block 3 is configured to measure a temperature and to communicate said measured temperature to a processing unit 5.

The temperature measurement accessory 1 comprises a mounting mechanism 7 configured to cooperate with the terminal block 3 according to an insertion direction 9 to a mounted position. The mounting mechanism 7 comprises a heat-conductive part 11 configured to cooperate with a current bar 13 of the terminal block 3 in the mounted position.

The temperature measurement accessory 1 comprises a temperature sensor 15 attached to or located in the heat-conductive part 11 and a connecting assembly 17 provided with a plug 19 arranged to cooperate with a complementary socket 21 of the processing unit 5 and with at least one connecting wire 23 attached at a first extremity 25 to the temperature sensor 15 and at a second extremity 27 to the plug 19. The first extremity 25 is extending subtantially parallel to the insertion direction 9.

In other words, the first extremity 25 is oriented from its junction point with the temperature sensor 15 substantially parallel to the insertion direction 9. Substantially parallel is equivalent to parallel or oblique with respect to the insertion direction 9.

Here, the at least one connecting wire 23 comprise two connecting wires 23, each comprising a first extremity 25 and a second extremity 27.

The temperature sensor 15 presents a main dimension extending substantially parallel to the insertion direction 9. The temperature sensor 15 presents an overall cylindrical form. Preferably, the temperature sensor 15 is a resistance thermometer, in particular of the PT1000 type.

The mounting mechanism 7 comprises a screw 29 configured to cooperate with a thread formed in the current bar 13. The screw 29 is included in the heat-conductive part 11 and comprises a threaded shank extending according to the insertion direction 9 in the mounted position.

As illustrated in figures 1 to 5, the mounting mechanism 7 includes a washer 31 configured to cooperate with a head 33 of the screw 29 in the mounted position, the temperature sensor 15 being attached to the washer 31 or located in a receiving orifice 35 of the washer 31.

The washer 31 comprises a transverse part 37 arranged for extending transversally to the insertion direction 9 and cooperating with the screw 29 in mounted position and a longitudinal part 39 arranged for extending substantially parallel to the insertion direction 9 in mounted position, the longitudinal part 39 being arranged to receive the temperature sensor 15.

The temperature sensor 15 is located in the receiving orifice 35 formed in the longitudinal part 39.

The longitudinal part 39 and the transverse part 37 are included in the heat-conductive part 11.

As illustrated in figure 1 to 3, the longitudinal part 39 comprises two portions 41, 43 that present symmetrical external dimensions with regard to the insertion direction 9 in the mounted position, the two symmetrical portions 41, 43 comprising a first portion 41 with the receiving orifice 35 and a second portion 43.

The longitudinal part 39 presents an elongated form transversally to the insertion direction 9 in the mounted position. The elongated form is defined by a constant lateral size 45. The transverse part 37 is also comprised within the constant lateral size 45 of the elongated form transversally to the insertion direction 9 in mounted position.

The transverse part 37 presents a through hole 47 for the passage of the screw 29 in the mounted position.

According to first alternative and a second alternative respectively illustrated in figures 4 and 5, the longitudinal part 39 comprises a unique portion located on one side of the head 33 of the screw 29.

According to the second alternative, the transverse part 37 presents a notch 49 instead of the through hole 47 for the passage of the screw 29 in the mounted position. The notch 49 is opening on the opposite side of the longitudinal part 39 with respect to the insertion direction 9 in the mounted position.

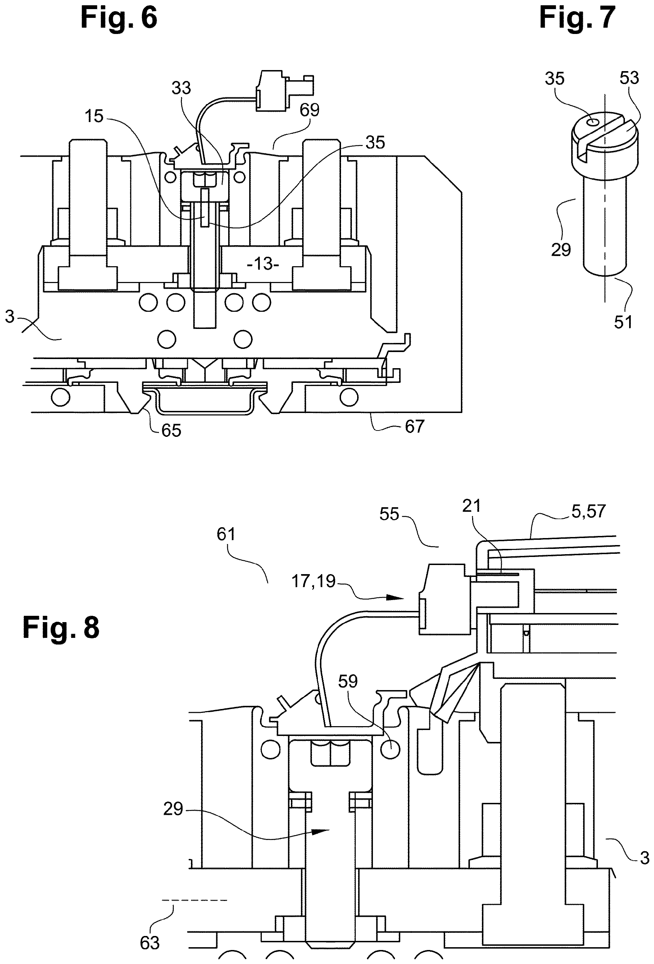

According to third alternative and a fourth alternative respectively illustrated in figures 6 and 7, the temperature sensor 15 is attached to or located in the screw 29.

According to the third alternative, the temperature sensor 15 is located in the receiving orifice 35 accessible from the head 33. The receiving orifice 35 extends according to an extension axis 51 of the screw 29. The extension axis 51 is aligned with the insertion direction 9. The receiving orifice 35 is at least partially located in a segment of the extension axis 51 facing the thread formed in the current bar 13 transversally to the insertion direction 9 in mounted position.

According to the fourth alternative, the receiving orifice 35 extends parallel to the extension axis 51 of the screw 29. The receiving orifice 35 is formed in a top surface 53 of the head 33.

There is also to be seen that an intermediate terminal block element 54 can be put between the mounting mechanism 7 and the current bar 13 in the mounted position as illustrated in figures 1 and 2 whereas it is absent in figure 6.

The intermediate terminal block element 54 can comprise a thread aligned with the thread of the current bar 13 to cooperate with the screw 29.

The intermediate terminal block element 54 can be a current conducting part as a shunt element of the terminal block 3 configured to electrically connect two terminal blocks 3 cooperating side by side.

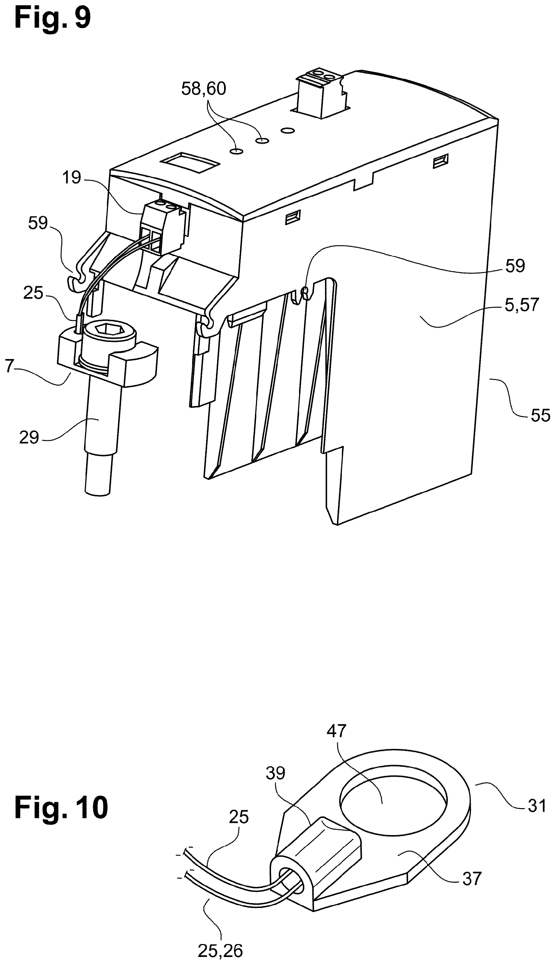

According to fifth alternative of the washer 31 illustrated in figure 10, the longitudinal part 39 comprises a unique portion located on one side of the head 33 of the screw 29.

According to the fifth alternative, the transverse part 37 presents a through hole 47 for the passage of the screw 29 in the mounted position. The temperature sensor 15 presents a main dimension extending transverse to the insertion direction 9.

The first extremity 25 is provided with a turning fraction 56 that changes from a transverse to a subtantially parallel orientation to the insertion direction 9 toward the second extremity 27.

As illustrated in figures 8 and 9, a temperature measurement system 55 comprises the temperature measurement accessory 1 and the processing unit 5.

The processing unit 5 comprises a measurement circuit 58 configured to determine if the communicated temperature measured by the temperature sensor 15 is comprised in an appropriate working range. The processing unit 5 also comprises a warning element 60 configured to be active when the communicated temperature is out of the appropriate working range.

The measurement circuit 58 comprises a microprocessor, a battery and/or a link to an external power source. Preferably, the warning element 60 comprises a light and in particular a LED. In particular, the warning element 60 comprises an alarm.

The processing unit 5 comprises a casing 57 configured to be removably attached to the terminal block 3. The casing 57 is provided with a hinge assembly 59 configured to cooperate with a complementary assembly of the terminal block 3. The processing unit 5 is movable around the hinge assembly 59 to enable a user to access an inside at least a part of the terminal block 3 without dismantling the processing unit 5.

The processing unit 5 comprises communication means, such as wired or wireless communication means. For example, a dedicated plug of the processing unit can be used to precisely monitor the measured temperature. A wireless communication means can emit radio waves for a distant control unit.

As illustrated in figures 8 and 9, a terminal block assembly 61 comprises the temperature measurement system 55 and the terminal block 3, the current bar 13 of the terminal block 3 extending in a plane 63 transverse to the insertion direction 9.

As illustrated in figure 6, the terminal block 3 comprises a rail connecting part 65 located on a bottom side 67 of the terminal block 3, the connecting wire 23 exiting a top side 69 of the terminal block 3 in the mounted position, the top side 69 being opposed to the bottom side 67 according to the insertion direction 9.

It appears that the temperature measurement accessory 1 is easy-to-install since the first extremity 25 exiting the temperature sensor 15 is aligned with the insertion direction 9. This feature therefore facilitates the adaptation to the geometry of the terminal block 3 that can remain simple: a straight opening with access to the current bar 13 is sufficient.

In addition, the temperature measurement accessory is adapted the overall shape of the terminal block with a reduced width compared to the other extending dimensions of the terminal block.

There is also no geometrical restriction due the placement of the processing unit 5 as the processing unit 5 is located remotely from the temperature sensor 15 and the mounting mechanism 7.

In addition, the use of a screw 29 enables a fast and reliable installation of the temperature measurement accessory 1 in the mounted position. As well, it is easy to dismantle the temperature measurement accessory 1 from the terminal block 3.

This provision enables to have on one side a compact temperature measurement accessory 1 that is easy to install on the terminal block 3 and on the other side a distant processing unit 5 that comprises the processing means necessary to warn the user when a default temperature is detected.

## Claims

1. Temperature measurement system (55) comprising a temperature measurement accessory (1) for a terminal block (3), the temperature measurement accessory (1) being configured to measure a temperature and to communicate said measured temperature to a processing unit (5), the temperature measurement accessory (1) comprising:
- a mounting mechanism (7) configured to cooperate with the terminal block (3) according to an insertion direction (9) to a mounted position, the mounted mechanism (7) comprising a heat-conductive part (11) configured to cooperate with a current bar (13) of the terminal block (3) in the mounted position,
- a temperature sensor (15) attached to or located in the heat-conductive part (11),
- a connecting assembly (17) provided with a plug (19) arranged to cooperate with a complementary socket (21) of the processing unit (5) and provided with at least one connecting wire (23) attached at a first extremity (25) to the temperature sensor (15) and at a second extremity (27) to the plug (19), the first extremity (25) being extending subtantially parallel to the insertion direction (9) or the first extremity (25) being provided with a turning fraction (56) that changes from a transverse to a subtantially parallel orientation to the insertion direction (9) toward the second extremity (27)
the temperature measurement system (55) also comprising the processing unit (5), wherein the processing unit (5) comprises a measurement circuit (58) configured to determine if the communicated temperature measured by the temperature sensor (15) is comprised in an appropriate working range, the processing unit (5) also comprising a warning element (60) configured to be active when the communicated temperature is out of the appropriate working range,
wherein the processing unit (5) comprises a casing (57) configured to be removably attached to the terminal block (3).

2. Temperature measurement system (55) according to claim 1, wherein the mounting mechanism (7) comprises a screw (29) configured to cooperate with a thread formed in the current bar (13).

3. Temperature measurement system (55)according to claim 2, wherein the mounting mechanism (7) includes a washer (31) configured to cooperate with a head (33) of the screw (29) in the mounted position, the temperature sensor (15) being attached to the washer (31) or located in a receiving orifice (35) of the washer (31), wherein the washer (31) comprises a transverse part (37) arranged for extending transversally to the insertion direction (9) and for cooperating with the screw (29) in mounted position and a longitudinal part (39) arranged for extending substantially parallel to the insertion direction (9) in the mounted position, the longitudinal part (39) being arranged to receive the temperature sensor (15), the longitudinal part (39) being included in the heat-conductive part (11).

4. Temperature measurement system (55)according to claim 3, wherein the temperature sensor (15) is located in the receiving orifice (35) formed in the longitudinal part (39).

5. Temperature measurement system (55)according to claim 4, wherein the longitudinal part (39) comprises two portions (41, 43) that present symmetrical external dimensions with regard to the insertion direction (9) in the mounted position, the two symmetrical portions (41, 43) comprising a first portion (41) with the receiving orifice (35) and a second portion (43).

6. Temperature measurement system (55) according to one of the claims 3 to 5, wherein the transverse part (37) presents a through hole (47) or a notch (49) for the passage of the screw (29) in the mounted position.

7. Temperature measurement system (55) according to one of the claims 2 to 3, wherein the temperature sensor (15) is attached to or located in the screw (29).

8. Terminal block assembly (61) comprising a temperature measurement system (55) according to one of the claims 1 to 7 and the terminal block (3), the current bar (13) of the terminal block (3) extending in a plane (63) transverse to the insertion direction (9).

## Patentansprüche

1. Temperaturmesssystem (55), umfassend ein Temperaturmesszubehör (1) für einen Terminalblock (3), wobei das Temperaturmesszubehör (1) konfiguriert ist, um eine Temperatur zu messen und die gemessene Temperatur an eine Verarbeitungseinheit (5) zu kommunizieren, das Temperaturmesszubehör (1) umfassend:
- Einen Montagemechanismus (7), der so konfiguriert ist, dass er mit dem Terminalblock (3) gemäß einer Einführungsrichtung (9) in eine montierte Position zusammenarbeitet, wobei der montierte Mechanismus (7) einen wärmeleitenden Teil (11) umfasst, der so konfiguriert ist, dass er mit einer Stromschiene (13) des Terminalblocks (3) in der montierten Position zusammenarbeitet,
- einen Temperatursensor (15), der an dem wärmeleitenden Teil (11) angebracht ist oder sich darin befindet,
- eine Verbindungsbaugruppe (17), die mit einem Stecker (19) versehen ist, der so angeordnet ist, dass er mit einer komplementären Buchse (21) der Verarbeitungseinheit (5) zusammenwirkt, und mit mindestens einem Verbindungsdraht (23) versehen ist, der an einem ersten Ende (25) an dem Temperatursensor (15) und an einem zweiten Ende (27) an dem Stecker (19) angebracht ist, wobei sich das erste Ende (25) im Wesentlichen parallel zur Einführungsrichtung (9) erstreckt oder das erste Ende (25) mit einem Drehteil (56) versehen ist, das sich von einer Orientierung quer zu einer Orientierung im Wesentlichen parallel zur Einführungsrichtung (9) zum zweiten Ende (27) hin ändert,
das Temperaturmesssystem (55) auch die Verarbeitungseinheit (5) umfasst, wobei die Verarbeitungseinheit (5) eine Messschaltung (58) umfasst, die so konfiguriert ist, dass sie bestimmt, ob die vom Temperatursensor (15) gemessene kommunizierte Temperatur in einem geeigneten Arbeitsbereich liegt, wobei die Verarbeitungseinheit (5) auch ein Warnelement (60) umfasst, das so konfiguriert ist, dass es aktiv wird, wenn die kommunizierte Temperatur außerhalb des geeigneten Arbeitsbereichs liegt,
wobei die Verarbeitungseinheit (5) ein Gehäuse (57) umfasst, das so konfiguriert ist, dass es abnehmbar an dem Terminalblock (3) angebracht werden kann.

2. Temperaturmesssystem (55) nach Anspruch 1, wobei der Befestigungsmechanismus (7) eine Schraube (29) umfasst, die so konfiguriert ist, dass sie mit einem in der Stromschiene (13) ausgebildeten Gewinde zusammenwirkt.

3. Temperaturmesssystem (55) nach Anspruch 2, wobei der Befestigungsmechanismus (7) eine Unterlegscheibe (31) einschließt, die so konfiguriert ist, dass sie in der montierten Position mit einem Kopf (33) der Schraube (29) zusammenwirkt, wobei der Temperatursensor (15) an der Unterlegscheibe (31) angebracht ist oder sich in einer Aufnahmeöffnung (35) der Unterlegscheibe (31) befindet, wobei die Unterlegscheibe (31) einen Querteil (37) umfasst, der so angeordnet ist, dass er sich quer zur Einführungsrichtung (9) erstreckt und mit der Schraube (29) in der montierten Position zusammenwirkt, und einen Längsteil (39), der so angeordnet ist, dass er sich in der montierten Position im Wesentlichen parallel zur Einführungsrichtung (9) erstreckt, wobei der Längsteil (39) so angeordnet ist, dass er den Temperatursensor (15) empfängt, wobei der Längsteil (39) in den wärmeleitenden Teil (11) eingeschlossen ist.

4. Temperaturmesssystem (55) nach Anspruch 3, wobei der Temperatursensor (15) in der in dem Längsteil (39) ausgebildeten Aufnahmeöffnung (35) angeordnet ist.

5. Temperaturmesssystem (55) nach Anspruch 4, wobei der Längsteil (39) zwei Abschnitte (41, 43) umfasst, die in der montierten Position symmetrische Außenabmessungen in Bezug auf die Einführungsrichtung (9) aufweisen, wobei die beiden symmetrischen Abschnitte (41, 43) einen ersten Abschnitt (41) mit der Aufnahmeöffnung (35) und einen zweiten Abschnitt (43) umfassen.

6. Temperaturmesssystem (55) nach einem der Ansprüche 3 bis 5, wobei der Querteil (37) ein Durchgangsloch (47) oder eine Kerbe (49) für den Durchgang der Schraube (29) in der montierten Position aufweist.

7. Temperaturmesssystem (55) nach einem der Ansprüche 2 bis 3, wobei der Temperatursensor (15) an der Schraube (29) angebracht ist oder sich in dieser befindet.

8. Klemmenblockbaugruppe (61), umfassend ein Temperaturmesssystem (55) nach einem der Ansprüche 1 bis 7 und den Terminalblock (3), wobei die Stromschiene (13) des Terminalblocks (3) in einer Ebene (63) quer zur Einführungsrichtung (9) verläuft.

## Revendications

1. Système de mesure de température (55) comprenant un accessoire de mesure de température (1) pour un bornier de jonction (3), l'accessoire de mesure de température (1) étant configuré pour mesurer une température et pour communiquer ladite température mesurée à une unité de traitement (5), l'accessoire de mesure de température (1) comprenant :
- un mécanisme de montage (7) configuré pour coopérer avec le bornier de jonction (3) selon une direction d'insertion (9) à une position montée, le mécanisme monté (7) comprenant une partie thermoconductrice (11) configurée pour coopérer avec une barre de courant (13) du bornier de jonction (3) dans la position montée,
- un capteur de température (15) fixé à ou situé dans la partie thermoconductrice (11),
- un ensemble de connexion (17) muni d'une fiche (19) agencée pour coopérer avec une prise complémentaire (21) de l'unité de traitement (5) et muni d'au moins un fil de connexion (23) fixé au niveau d'une première extrémité (25) au capteur de température (15) et au niveau d'une deuxième extrémité (27) à la fiche (19), la première extrémité (25) s'étendant de manière sensiblement parallèle à la direction d'insertion (9) ou la première extrémité (25) étant munie d'une partie tournante (56) qui passe d'une orientation transversale à une orientation sensiblement parallèle à la direction d'insertion (9) vers la deuxième extrémité (27)
le système de mesure de température (55) comprenant également l'unité de traitement (5), où l'unité de traitement (5) comprend un circuit de mesure (58) configuré pour déterminer si la température communiquée mesurée par le capteur de température (15) est comprise dans une plage de travail appropriée, l'unité de traitement (5) comprenant également un élément d'avertissement (60) configuré pour être actif lorsque la température communiquée est hors de la plage de travail appropriée,
dans lequel l'unité de traitement (5) comprend un boîtier (57) configuré pour être fixé de manière amovible au bornier de jonction (3).

2. Système de mesure de température (55) selon la revendication 1, dans lequel le mécanisme de montage (7) comprend une vis (29) configurée pour coopérer avec un filetage formé dans la barre de courant (13).

3. Système de mesure de température (55) selon la revendication 2, dans lequel le mécanisme de montage (7) comprend une rondelle (31) configurée pour coopérer avec une tête (33) de la vis (29) dans la position montée, le capteur de température (15) étant fixé à la rondelle (31) ou situé dans un orifice de réception (35) de la rondelle (31), où la rondelle (31) comprend une partie transversale (37) agencée pour s'étendre transversalement à la direction d'insertion (9) et pour coopérer avec la vis (29) dans la position montée et une partie longitudinale (39) agencée pour s'étendre de manière sensiblement parallèle à la direction d'insertion (9) dans la position montée, la partie longitudinale (39) étant agencée pour recevoir le capteur de température (15), la partie longitudinale (39) étant incluse dans la partie thermoconductrice (11).

4. Système de mesure de température (55) selon la revendication 3, dans lequel le capteur de température (15) est situé dans l'orifice de réception (35) formé dans la partie longitudinale (39).

5. Système de mesure de température (55) selon la revendication 4, dans lequel la partie longitudinale (39) comprend deux portions (41, 43) qui présentent des dimensions externes symétriques par rapport à la direction d'insertion (9) dans la position montée, les deux portions symétriques (41, 43) comprenant une première portion (41) avec l'orifice de réception (35) et une deuxième portion (43).

6. Système de mesure de température (55) selon l'une des revendications 3 à 5, dans lequel la partie transversale (37) présente un trou traversant (47) ou une encoche (49) pour le passage de la vis (29) dans la position montée.

7. Système de mesure de température (55) selon l'une des revendications 2 à 3, dans lequel le capteur de température (15) est fixé à ou situé dans la vis (29).

8. Ensemble bornier de jonction (61) comprenant un système de mesure de température (55) selon l'une des revendications 1 à 7 et le bornier de jonction (3), la barre de courant (13) du bornier de jonction (3) s'étendant dans un plan (63) transversal à la direction d'insertion (9).
